# EUROPEAN PATENT SPECIFICATION

(11) **EP 3 144 361 B1**
(45) Date of publication and mention of the grant of the patent: **22.08.2018**
(21) Application number: 15002710.0
(22) Date of filing: 18.09.2015
(51) Int. Cl.: C09J 153/02, C08L 53/02, C08K 3/00, C08L 91/00

(54) **ADHESIVE COMPOSITION AND ADHESIVE TAPE WITH LOW CREEP**
KLEBSTOFFZUSAMMENSETZUNG UND KLEBEBAND MIT GERINGEM KRIECHVERHALTEN
COMPOSITION D'ADHÉSIF ET RUBAN ADHÉSIF À FAIBLE FLUAGE

(43) Date of publication of application: 22.03.2017
(73) Proprietor: NITTO BELGIUM N.V, 3600 Genk (BE)
(72) Inventor: Wouters, Jimmy, 3600 Genk (BE)
(74) Representative: Grünecker Patent- und Rechtsanwälte PartG mbB

(56) References cited:
- WO-A1-2014/020243
- WO-A2-2006/107763
- US-A1- 2008 153 981
- US-A1- 2011 105 672

## Description

### FIELD OF INVENTION

This invention relates to an adhesive composition comprising a mixture of a styrene-butadiene-styrene (SBS) triblock copolymer and styrene-butadiene (SB) diblock copolymers, to adhesive tapes comprising said composition and to methods of their preparation.

### BACKGROUND OF THE INVENTION

The use of adhesive compositions comprising block copolymers as thermoplastic components in the preparation of pressure-sensitive adhesive (PSA) compositions and hot-melt adhesives is widely known. Typically, such compositions comprise acrylic block copolymers (see e.g. US 2003/0114582 A1) or linear and/or radial block copolymers based on polystyrene blocks and polybutadiene and/or polyisoprene blocks, such as e.g. styrene-isoprene-styrene (SIS) triblock copolymers and radial or linear styrene-butadiene-styrene (SBS) triblock copolymers, as disclosed in US 2008/0153981 A1, WO 2006/017763 A2, and WO 2014/020243, for example.

In various industrial and household applications, there is a need for adhesive compositions which exhibit high shear strength, good adhesion to a variety of substrates (e.g. polypropylene, glass cloth, painted and oily steel), low creep, easy and residue-free removability, and applicability at a wide temperature range.

In this regard, US 2011/0105672 A1 discloses an adhesive composition having favourable loop tack, wherein the composition comprises: a block copolymer consisting of a triblock copolymer and a diblock copolymer, each comprising a vinylaromatic monomer polymer and a conjugated diene polymer; and a hydrocarbon adhesive resin. Said composition also essentially requires the addition of a plasticizer in order to be processible. However, the use of plasticizers and low-molecular and/or liquid components (e.g. liquid polybutenes, oils, paraffin, solvents) in general is disadvantageous under environmental aspects and in high-temperature applications due to possible odor development and fogging.

US 2014/0371376 A1 discloses a pressure-sensitive adhesive paste and tape which retains high bonding strengths and shear strengths even at elevated temperatures, the PSA composition comprising a vinylaromatic block copolymer, at least one tackifier resin, and a second copolymer based on a vinylaromatic and an unsaturated anhydride. However, the removability of such PSA compositions and the adhesive properties on oily surfaces leaves room for improvement.

Therefore, it remains desirable to provide environmentally friendly adhesive compositions and tapes which at the same time exhibit high shear strength, low creep rates, excellent adhesion on a large number of surfaces, low or no sagging at high temperatures, good processability and easy removability without leaving residues.

Furthermore, the provision of an improved method for manufacturing such adhesive compositions and tapes is desirable.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a pressure-sensitive adhesive composition comprising a mixture of: (a) a styrene-butadiene-styrene triblock copolymer, (b) a styrene-butadiene diblock copolymer, and (c) an aromatic modified aliphatic hydrocarbon resin; wherein the content of component (c) in the mixture is in the range of from 10 to 45 wt.-% relative to the total weight of the mixture.

Herein, the mixture further comprises a filler, the filler being preferably selected from any of chalk, alumina, alumina gel, boehmite, pseudoboehmite, calcium carbonate, magnesium carbonate, pyropylate, zeolite, talc, silica, silica gel, synthetic calcium silicates, anhydrous silicic acid powder, aluminum hydroxide, barite, barium sulfate, gypsum, or calcium sulfate, and wherein the content of filler in the mixture is in the range of from 10 to 50 wt.-% relative to the total weight of the mixture.

In another aspect, the present invention provides a pressure-sensitive adhesive composition in accordance to any of the above definitions, wherein the content of component (c) in the mixture is in the range of from 25 wt.-% to 40 wt.-%, relative to the total weight of the mixture and wherein component (c) has preferably a melt viscosity of less than 840 mPa·s at 160°C.

In a further aspect, the present invention provides a pressure-sensitive adhesive composition as described above, wherein the mixture further comprises a thixotropic agent, the content of the thixotropic agent in the mixture being preferably in the range of from 0.1 wt.-% to 25 wt.-%, more preferably in the range of from 1 to 18 wt.-% relative to the total weight of the mixture. Preferably, the thixotropic agent is clay.

In another aspect the present invention provides a pressure-sensitive adhesive composition in accordance to any of the above definitions, wherein the total content of components (a) and (b) is less than 38 wt.-% relative to the total weight of the mixture, and preferably in the range of from 5 wt.-% to 38 wt.-% relative to the total weight of the mixture.

A further aspect of the present invention is a pressure-sensitive adhesive composition in accordance to any of the above definitions, wherein the composition does not comprise liquid components and/or wherein the composition does not comprise a plasticizer in a content of 8 wt.-% or more relative to the total weight of the mixture.

The present invention further provides a pressure-sensitive adhesive tape comprising the composition according to any of the above definitions.

Another aspect of the present invention is a method of manufacturing a pressure-sensitive adhesive tape, comprising the steps of: preparing a pressure-sensitive adhesive composition according to any of the above definitions, preferably by an extrusion process; and passing the pressure-sensitive adhesive composition through a flat die.

### BRIEF DESCRIPTION OF THE DRAWINGS

FIG. 1 is a schematic representation of an exemplary method for producing a pressure-sensitive adhesive tape in accordance to the present invention.
FIG. 2A and FIG. 2B schematically represent an exemplary method for producing a pressure-sensitive adhesive tape in accordance to the present invention comprising mixing on a kneader.
Fig. 3 illustrates the configuration/assembly used for the evaluation of the PSA tape performance.

### DETAILED DESCRIPTION OF THE INVENTION

For a more complete understanding of the present invention, reference is now made to the following description of the illustrative embodiments thereof:

### Pressure-sensitive adhesive composition

In a first embodiment, the present invention generally relates to a pressure-sensitive adhesive composition comprising a mixture of: (a) a styrene-butadiene-styrene triblock copolymer, (b) a styrene-butadiene diblock copolymer, and (c) an aromatic modified aliphatic hydrocarbon resin; wherein the content of component (c) in the mixture is in the range of from 10 to 45 wt.-% relative to the total weight of the mixture. Said composition has been surprisingly found to enable production of pressure-sensitive adhesive tapes which exhibit a high shear strength, low creep when force is in shear, are easily debondable by pulling in view of a favourable cohesion strength and are particularly useful for bonding on a large variety of surfaces (e.g. oily steel) and in high temperature environments. In a preferred embodiment, the pressure-sensitive adhesive composition consists of the mixture comprising the components (a), (b) and (c).

The styrene-butadiene-styrene (SBS) triblock copolymer used as component (a) of this invention is a linear or radial A-B-A block copolymer of the type which comprises an elastomeric B-block (center block) derived from butadiene, i.e., polymerized from butadiene, either alone or in conjunction with a small proportion of other monomers, or derived from a copolymer of ethylene and butylene; and thermoplastic A-blocks (end blocks) derived from styrene, i.e., polymerized from styrene or styrene homologues. The presence of styrene-butadiene-styrene (SBS) triblock copolymer is required to provide PSA tapes with a sufficiently low creep rate. Furthermore, the use of styrene-butadiene-styrene (SBS) triblock copolymers has the advantages that it effectively increases the maximum application temperature of the resulting PSA tapes to 110°C or higher and that it is less expensive compared to styrene-isoprene-styrene (SIS) triblock copolymers. The individual styrene blocks in component (a) preferably constitute 5-50 wt.-%, more preferably 20 to 40 wt.-% of the triblock copolymer. Preferably, the styrene-butadiene-styrene triblock copolymer exhibits a linear structure. The weight-average molecular weight of the SBS triblock copolymer is preferably in the range of from 10,000 to 500,000 and/or higher than that of the SB diblock copolymer used as component (b).

The styrene-butadiene (SB) diblock copolymer used as component (b) is a linear or radial A-B block copolymer of the type which comprises an elastomeric B-block (center block) derived from butadiene, i.e., polymerized from butadiene, either alone or in conjunction with a small proportion of other monomers, or derived from a copolymer of ethylene and butylene; and a thermoplastic A-block derived from styrene, i.e., polymerized from styrene or styrene homologues. It is noted that the A- and B-blocks present in each of the components (a) and (b) may be same or different. The presence of styrene-butadiene-styrene (SB) diblock copolymers ensures a sufficient adhesion on a wide range of surfaces, i.e. oily BA steel surfaces. The individual styrene blocks in component (b) preferably constitute 5-50 wt.-%, more preferably 20 to 40 wt.-% of the diblock copolymer. Preferably, the styrene-butadiene diblock copolymer exhibits a linear structure. The weight-average molecular weight of the SB diblock copolymer is preferably in the range of from 1,000 to 50,000 and/or higher than that of the SBS triblock copolymer used as component (a).

In general, the weight ratio of components (a) to (b) in the mixture is preferably in the range of from 1:99 to 99:1. In order to obtain a favourable balance of adhesion properties and creep performance, the ratio of components (a) to (b) in the mixture is preferably in the range of from 10:90 to 90:10, more preferably from 20:80 to 80:20, even more preferably 30:70 to 70:30 by weight.

The total content of components (a) and (b) is preferably less than 38 wt.-% relative to the total weight of the mixture as higher amounts may promote sagging under high-temperature conditions. More preferably, the total content of components (a) and (b) is in the range of from 5 wt.-% to 38 wt.-%, even more preferably from 15 wt.-% to 38 wt.-%, further preferably from 25 wt.-% to 38 wt.-%, relative to the total weight of the mixture.

The aromatic modified aliphatic hydrocarbon resin used as component (c) is not particularly limited as long as it is aromatically modified and exhibits sufficient compatibility with the SBS triblock copolymer. The hydrocarbon resin may be a C5, a C5/C9 or a C9 hydrocarbon resin. The aromatic modified aliphatic hydrocarbon resin preferably exhibits a ring and ball softening point in the range of 80 to 105°C, more preferably in the range of 85 to 102°C (as determined by ASTM E 28). Preferable aromatic modified aliphatic hydrocarbon resins in terms of the tape creep performance have a melt viscosity of less than 840 mPa·s at 160°C, more preferably a melt viscosity at 160°C in the range of from 450 to 840 mPa·s, which may be determined in accordance with ASTM D 3236.

In order to ensure sufficient adhesion properties, the content of component (c) in the mixture is generally 10 wt.-% or more relative to the total weight of the mixture, preferably 20 wt.-% or more, more preferably 25 wt.% or more.

Also, the upper limit of the content of component (c) in the mixture is 45 wt.-%, preferably 40 wt.-% relative to the total weight of the mixture, as contents of more than 45 wt.-% may in some cases lead to an increase of the creep rate of the resulting PSA tape.

The mixture further comprises a filler. The filler material is not particularly limited and may be e.g. selected from any of chalk, alumina, alumina gel, boehmite, pseudoboehmite, calcium carbonate, magnesium carbonate, pyropylate, zeolite, talc, silica, silica gel, synthetic calcium silicates, anhydrous silicic acid powder, aluminum hydroxide, barite, barium sulfate, gypsum, or calcium sulfate. Preferably, the filler is selected from any of chalk, talk or silica. More preferably, chalk is used as the filler material. The use of a filler not only lowers the PSA tape production costs but surprisingly also tends to contribute to reducing creep and the improvement in shear performance (i.e. shear modulus, dynamic shear) of the PSA tape. In general, the filler is employed in a content of 10 to 50 wt.-%, preferably 15 to 38 wt.-% relative to the total weight of the mixture.

In a further preferred embodiment in combination with any of the above-described embodiments, the mixture further comprises a thixotropic agent, the content of the thixotropic agent in the mixture being preferably in the range of from 0.1 wt.-% to 25 wt.-%, more preferably in the range of from 1 to 18 wt.-% relative to the total weight of the mixture. The presence of a thixotropic agent has been found to further reduce the creep rate and high-temperature sagging.

It is preferable to use natural and/or synthetic clays as thixotropic agents. As examples, montmorillonite, kaolinite, illite, bentonite, halloysite, hectorite clays and modified forms thereof may be specifically mentioned.

The pressure-sensitive adhesive composition according to the present invention may further optionally contain additives conventionally used in the art, such as e.g. anti-aging agents, antioxidants, softeners, UV-absorbers, surfactants, antistatic agents, and/or coloring agents (e.g. carbon black).

Since the pressure-sensitive adhesive composition according to the present invention may be easily manufactured by processing methods specifically suitable for solid or highly viscous materials, such as extrusion processes, the addition of liquid components or plasticizers to the mixture for the purpose of lowering the viscosity and improving the processability in batch mixing methods, for example, is in principle not required. To the contrary, going without components that are liquid under processing conditions may even simplify the manufacture of PSA tapes by extrusion, for example. Hence, the amount of volatile components which may cause high total carbon emissions under elevated temperature environments may be effectively kept at a minimum. These benefits are not only important in industrial automotive applications, wherein car interior materials have to fulfill strict standards in terms of carbon or VOC emission (e.g. VDA 277 testing setting the maximum carbon emission to ≤ 50 µg C/ g), fogging (FOG emission) and odor emission, but of course also under environmental aspects in general.

It is preferable that the pressure-sensitive adhesive composition in accordance with the present invention does not comprise a plasticizer in a content of 8 wt.-% or more relative to the total weight of the mixture, wherein plasticizers may include paraffin-based or naphthene-based plasticizers, i.e. liquid polybutene, liquid polyisoprene copolymers, liquid styrene-isoprene copolymers, liquide styrene-conjugated diene copolymers, vegetable oil and derivatives, for example. More preferably, the pressure-sensitive adhesive composition does not comprise a plasticizer at all. Apart from the abovementioned environmental advantages, the addition of plasticizers in a content of 8 wt.-% or more relative to the total weight of the mixture adversely affects the creep rate, shear properties and adhesion on oily surfaces.

### Pressure-sensitive adhesive tape and its applications

In a second embodiment, the present invention relates to a pressure-sensitive adhesive tape comprising the pressure-sensitive adhesive composition in accordance with the first embodiment described above.

The pressure-sensitive adhesive tape according to the present invention may be a single-sided or a preferably a double-sided adhesive tape. Depending on the desired application, the pressure-sensitive adhesive tape according to the present invention may have a single layer or a multilayer configuration, as long as at least one of the layers are formed by the PSA composition as described in the first embodiment.

Single-sided adhesive tapes typically comprise a carrier material which is provided on one side of the surface of the pressure-sensitive adhesive composition (or layer), wherein the carrier material is preferably formed of polymer sheets or film composites known in the art, such as e.g. polyethylene (PE), polypropylene (PP), polyvinyl chloride (PVC), polyesters-especially polyethylene terephthalate (PET) and polyethylene naphthalate (PEN), polyacrylonitrile (PAN), polycarbonate (PC), polyamide (PA), polyethersulphone (PES) or polyimide (PI). Other multilayer configurations are possible for single-sided adhesive tapes. For instance, a non-adhesive layer with higher mechanical stiffness may be combined with the PSA layer comprising the PSA composition of the present invention to further improve the debondability and/or to allow to produce thinner PSA tapes that are less prone to breaking at debonding.

Double-sided adhesive tapes may be manufactured without the use of a carrier material, i.e. by applying the single layer or multilayer adhesive composition prior to application between two flexible release liners made from materials conventionally known to the skilled artisan. For application, generally one liner is first removed, the adhesive is applied, and then the second liner is removed so as to allow the adhesive to be used for directly joining two surfaces. Alternatively, the tape may comprise a single double-sidedly releasing flexible liner.

Double-sided adhesive tapes comprising a single-layer configuration, i.e. comprising a single layer of a PSA composition in accordance with the first embodiment, may be manufactured easily and in a cost-effective manner. In such a configuration it is preferable for the purpose of improving the debondability that the overall thickness of the single layer is more than 500 µm, more preferably more than 700 µm, even more preferably 1000 µm or more.

Double-sided adhesive tapes comprising a multilayer configuration, i.e. comprising at least one layer of a PSA composition in accordance with the first embodiment as the adhesive layer, may be configured so as to satisfy additional requirements depending on the desired application. While not being limited thereto, two layer configurations may comprise a second layer consisting of a PSA composition other than that of the present invention, which is specifically adapted to the use on different surfaces, for example. Moreover, an exemplary three-layer configuration may be mentioned, wherein the two outer layers consist of a PSA composition in accordance with the present invention, and a third inner layer provides an additional function depending on the purpose (e.g. layer having a different hardness or flexibility, foamed layer, layer formed by less expensive material, etc.).

In general, the pressure sensitive adhesive tapes in accordance to the present invention particularly proves its strengths in industrial and household bonding applications where high shear strength, good adhesion to a variety of substrates (e.g. polypropylene, glass cloth, painted and oily steel), low creep, easy and residue-free removability, and applicability at a wide temperature range is required. Typical fields of application include the attachment of reinforcing, vibrational damping, noise reducing and/ or thermally insulating material in the white good field (incl. dishwashers or washing machines), automotive, aerospace, construction or architecture (including interior design) applications, which involve high temperature environments (and/or vast temperature changes). With the pressure-sensitive adhesive tapes according to the present invention, strong bonding may also be achieved on painted metal surfaces, which has the advantage that e.g. damping material may be attached after painting, thereby reducing the corrosion of the surface onto which the tape is provided.

### Method of manufacturing pressure-sensitive adhesive tapes

The method for the preparation of a pressure-sensitive adhesive composition in accordance with the present invention is not particularly limited and may be brought about by mixing components (a), (b) and (c) according to techniques known in the art, incl. mixing in a batch mixer, kneading and/or mixing by an extrusion method.

Pressure-sensitive adhesive tapes may be manufactured by preparing a pressure-sensitive adhesive composition according to the first embodiment (mixing step); and passing the pressure-sensitive adhesive composition through a flat die.

Coating of the pressure-sensitive adhesive composition onto a release liner and/or other layers may be carried out after passing the composition through the flat die, e.g. by using multiple roll calendars, wherein the release liner and/or other layers are wound onto rolls according to the desired configuration. In order to achieve advantageously flat surfaces, it is preferable to heat laminate the liner and the adhesive layer at temperatures of from 95 to 130°C, preferably of from 100 to 120°C with a heat roll.

In a preferred embodiment of the mixing step, masterbatch pellets are prepared by mixing component (c), optional fillers and additives, and a fraction of less than a half, preferably less than one third, of the total amount of components (a) and (b) to be used in the actual pressure-sensitive adhesive composition. Such a masterbatch composition can be prepared by using a twin screw extruder and a pelletizer, preferably an underwater-pelletizer. Advantageously, as the total amount of components (a) and (b) is relatively low, the pellets are typically not self-adhesive and therefore allow facilitated storage and handling. For the actual preparation of the pressure-sensitive adhesive tape, the masterbatch pellets may be mixed with the remaining amount of components (a) and (b) and extruded using a single or twin screw extruder.

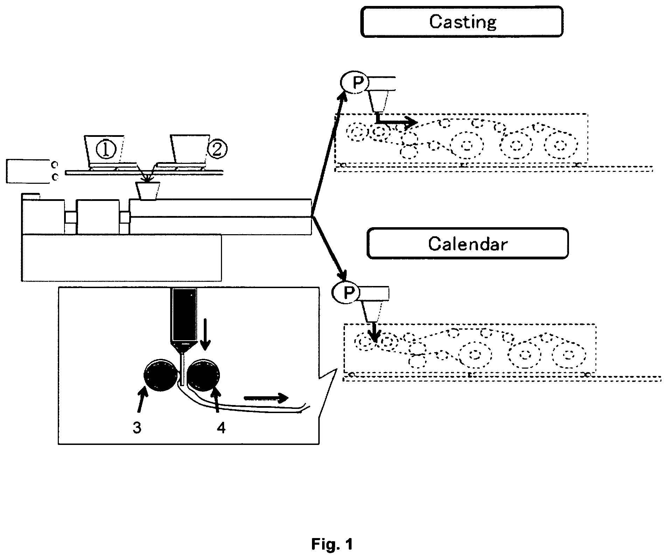

In an alternatively preferred embodiment, the mixing step may be carried out in a single step by mixing (e.g. in a twin screw extruder) all ingredients (a), (b), and (c) together with optional fillers and additives in the actual amount to be used in the pressure-sensitive adhesive composition. An exemplary PSA tape manufacturing method comprising such a mixing step is illustrated in Fig. 1. Herein, the components A and B (wherein A may represent components (a) and (b), and B may represent component (c), for example) are mixed in a twin screw extruder. The mixture is then transferred via gear pump (P) and passed through a flat die and casted on a liner (see upper right portion) or dropped between two liners (see lower right portion) of a multiple roll calendar to obtain a pressure-sensitive adhesive film having a smooth surface. As is shown by the illustration in the lower left portion of Fig. 1, a release liner (3) and a further release liner or a different layer (4) comprised in the tape may be wound onto liner for efficient and continuous coating.

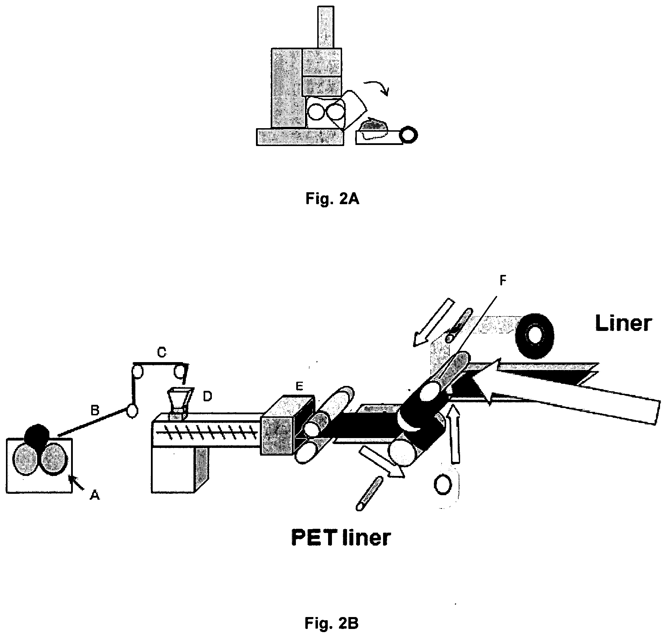

In a further alternatively preferred embodiment, the mixing step comprises kneading the components comprised in the pressure-sensitive composition according to the first embodiment in a batch kneader to produce a kneaded compound. In the batch kneader, the material is mixed, typically at a temperature of from 120 to 160°C, preferably at a temperature of 145 to 155°C (see e.g. Fig 2A). An exemplary PSA tape manufacturing method is illustrated in Figure 2B. After the kneading process, the compound may be optionally cut in smaller blocks and packaged in a siliconized liner for in-between storage or directly used on a mill (A). In case of storage, the material may be required to be pre-heated to 80°C before putting on the mill. A strip of material is cut from the mill and directed (B & C) into an extruder (D). Coating of the pressure-sensitive adhesive composition onto a release liner and/or other layers is carried out after passing the extruded composition through the flat die (E), e.g. by using multiple roll calendars, wherein the release liner and/or other layers are wound onto rolls according to the desired configuration, including the lamination of the liner and the adhesive layer with a heat roll (F).

### EXAMPLES

### Preparation of pressure-sensitive adhesive compositions

Pressure-sensitive adhesive compositions according to the present invention have been prepared by manually mixing the components in accordance with Table 1 in a small glass container. The components are explained in the following:

As component (a), Dynasol Calprene® 501, a commercially available SBS triblock copolymer having a linear structure and a total styrene (on polymer) content of 31% (according to ASTM D-5775) was used.

As component (b), Dynasol Solprene® 4302, a commercially available SB diblock copolymer having a linear structure and a total styrene (on polymer) content of 31% (according to ASTM D-5775) was used.

As component (c), Piccotac® 7590-N, a commerically available, aromatic modified aliphatic hydrocarbon resin (ring and ball softening point: 91 °C (ASTM E-28); Melt viscosity at 160°C: 520 mPa·s (ASTM D 3236) was used.

Escorez® 1102 is an aliphatic hydrocarbon resin commercially available from ExxonMobil Chemical.

Claytone® HT is a modified montmorillonite-type clay commercially available from Southern Clay Products, Inc.

Chalk was used as exemplary filler material. In each of the exemplary formulations, carbon black was used as coloring agent.

**TABLE 1**

| | Example 1 | Example 2 | Comparative Example 1 | Comparative Example 2 | Comparative Example 3 | Comparative Example 4 |
|---|---|---|---|---|---|---|
| (a) Dynasol 501 [pts. by weight] | 50 | 50 | 50 | 50 | 100 | - |
| (b) Dynasol 4302 [pts. by weight] | 50 | 50 | 50 | 50 | - | 100 |
| (c) Resin (Piccotac 7590-N) [pts. by weight] | 100 | 100 | 200 | - | 100 | 100 |
| Chalk [pts. by weight] | 100 | 60 | 100 | 100 | 100 | 100 |
| Resin (Escorez 1102) [pts. by weight] | - | - | - | 100 | - | - |
| Claytone HT [pts. by weight] | 10 | 50 | 10 | 10 | 10 | 10 |
| Carbon black [pts. hy weight] | 4 | 4 | 4 | 4 | 4 | 4 |

### Preparation of pressure-sensitive adhesive tape

Pressure-sensitive adhesive tapes using were prepared, using the compositions in accordance with Table 1, with sample sizes of between 300 and 500g depending on the formulation. For this purpose, the compositions were first fed to a twin screw extruder (Berstorff ZE25 A x 31 D - UT), wherein they were melted to 165°C (last zones of the extruder at 165°C, the first zone at 80°C to avoid melting of resin at the extruder feeder) and extruded at a speed of 125 rpm to form a thick plaque. At least 200g of each of the compositions was used to flush the extruder, while the last 100-200g of extruded material was used for analysis. This thick plaque was then cut to a smaller size and pressed on a heat press (Fontijne Holland TP 400) to a disk of 30 cm diameter and a thickness of 1 mm (temperature setting for pressing: 150°C; pressing time: 3 min, pressure: 60 kN). The material was then pressed between two release liners (PET-liner) to avoid sticking to the metal plates of the press.

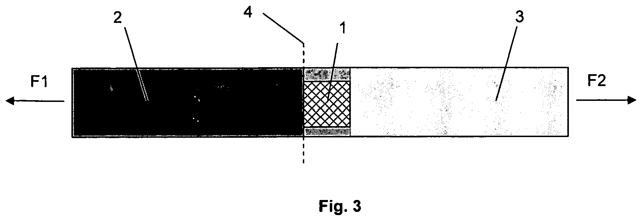

Different measurements have been carried out to evaluate the shear modulus , the dynamic shear, the creep rate, the removability, the adhesion properties (180° peel, and on oily steel after a dwell time of 30 min and 24 h) and the sagging at 180°C and 210°C, each of which will be explained in the following:
Shear modulus: The sample sheets were kept at room temperature for at least 1 hour before testing. An assembly in accordance with Fig. 3 was prepared. Two metal plates (BA-steel, 1 mm thickness) were cleaned with a light alcoholic spirit (n-heptane or isopropanol) and dried until no stains were visible. Out of the sample to be tested, a piece of tape (1) having a width of 20 mm was cut and positioned on the first plate (2) exactly under a previously indicated line (indication line (4) at 20 mm from the edge). The portion of the tape not in contact with the plate (1) was cut off and the separator was removed from the tape. Subsequently, the second plate (3) was put on the tape exactly under the indication line, and a roll (2 kg) was rolled twice over the assembly. After 30 min. the plates (1) and (2) were pulled apart in opposite directions (F1/F2) by a dynamometer using a speed of 300 mm/min. The modulus was calculated and expressed in MPa.
Dynamic shear: Using the same measurement as for the shear modulus, the maximum force was used to calculate the dynamic shear force. The result is expressed as N/4cm².
Creep rate: The creep rate of the samples was determined by preparing the assembly as for measuring the shear modulus and dynamic shear (Fig. 3). However, in this case the plates were pulled apart by means of the dynamometer using a force of 50 N and elongation was measured for at least 2 minutes. The creep rate (in mm/min) was calculated as the elongation that occurs between 1 and 2 minutes of applying the force of 50 N.
Adhesion 180° peel: All samples were kept at 23° ± 2°C and 50 ± 5 % relative air humidity for at least 1 h before testing. A metal plate (BA-steel, 1 mm thickness) was cleaned and degreased with a light alcoholic spirit (n-heptane or isopropanol) and dried until no stains were visible. On one side of the sample tape to be tested, the liner was removed and a 20 mm cut strip of sample material was provided on the metal plate. Thereafter, the liner on the other side of the sample tape was removed and a PET foil was applied on top of the tape. A roll (2 kg) was rolled twice over the resulting assembly with a speed of 0,05 m/s. After 30 min, the adhesion of the tape on the metal under an angle of 180°, i.e. the average peel force (in N/20mm) was measured with a dynamometer (speed 300 mm/min).
Adhesion on oily steel: All samples were kept at 23° ± 2°C and 50 ± 5 % relative air humidity for at least 1 h before testing. A metal plate (BA-steel, 1 mm thickness) was cleaned and degreased with a light alcoholic spirit (n-heptane or isopropanol) and dried until no stains were visible. A thin film of oil (Fuchs deep draw oil, ∼ 1 g/m²) was applied on the steel plate. A 20 mm cut strip of sample material was provided on the metal plate. Thereafter, a roll (2 kg) was rolled twice over the resulting assembly with a speed of 0,05 m/s. After leaving the panel horizontally at room temperature for 30 minutes, the adhesion (under an angle of 180°) was measured by means of a dynamometer (speed 300mm/min). The measurement was repeated after leaving the panel horizontally at room temperature for 24 hours.
Removability: The removability was checked by applying the sample tape on a clean metal plate. The metal plate (together with the tape) was shortly heated (1 minute) to 130°C to ensure a high bonding strength. After 24h at room temperature, the tape was removed by pulling on the tape at an angle < 10°. In case the tape did not break and allowed easy removal from the metal plate, the tape was considered removable.
Sagging at 180°C / 210°C: A sample tape having a dimension of 2 cm x 2 cm was cut. The liner was removed from one side, leaving the liner on the other side attached. After attaching the sample to a cleaned metal plate, a mark was made with a narrow tip pen on the liner and metal plate to indicate the original position. Subsequently, the metal plate (together with the sample) was placed vertically in an oven at 180°C or 210°C, respectively. After 20 minutes, the plate was taken out of the oven and left horizontally to cool down. The amount of sagging (in mm) was determined by measuring the distance between the mark on the liner versus the mark on the metal plate.

The results of the performance tests are shown in Table 2.

**TABLE 2**

| | Example 1 | Example 2 | Comparative Example 1 | Comparative Example 2 | Comparative Example 3 | Comparative Example 4 |
|---|---|---|---|---|---|---|
| Shear modulus (300mm/min) [MPa] | 2770 | 14900 | 16200 | 22200 | 5230 | 3220 |
| Dynamic shear (300mm/min) [N/4cm²] | 295 | 597 | 507 | 635 | 455 | 678 |
| Creep rate [mm/min] | 0.01 | 0.01 | 0.12 | 0.00 | 0.01 | 0.03 |
| Removability | yes | yes | yes | no | yes | yes |
| Adhesion 180° Peel [N/20mm] | 1570 | 2750 | n.m.* | not adhesive | 993 | 1790 |
| Adhesion on oily steel (30 min dwell) [N/20mm] | 1131 | 2546 | 3204 | not adhesive | 920 | 1697 |
| Adhesion on oily steel (24 h dwell) [N/20mm] | 1340 | n.m.* | 4210 | 2780 | 1080 | 1730 |
| Sagging at 180°C [mm] | 0 | 0 | 0 | 0 | 0 | 0 |
| Sagging at 210°C [mm] | < 1 | < 1 | <1 | < 1 | <1 | < 1 |

| | | | | | | |
|---|---|---|---|---|---|---|
| * not measured | | | | | | |

As is shown by means of Examples 1 and 2 in comparison with Comparative Example 1, the use of component (c) at a content higher than that as required in the present invention (i.e. 48.3 wt.-% relative to the total weight of the mixture) results in undesirably high creep rate. The examples of the present invention further show both improved adhesion properties and removability when compared to a composition using a hydrocarbon resin resin which has not been aromatically modified instead of component (c) (comparative Example 2). Furthermore, the comparison between Examples 1 and 2 and Comparative Examples 3 and 4 shows that an excellent balance of creep properties and adhesion performance is obtained by using both components (a) and (b).

Hence, it has been demonstrated that the PSA tapes of the present invention at the same time exhibit high shear strength, low creep rates, excellent adhesion on a large number of surfaces, low or no sagging at high temperatures, good processability and easy removability without leaving residues.

Once given the above disclosure, many other features, modifications, and improvements will become apparent to the skilled artisan.

## Claims

1. A pressure-sensitive adhesive composition comprising a mixture of:
(a) a styrene-butadiene-styrene triblock copolymer,
(b) a styrene-butadiene diblock copolymer, and
(c) an aromatic modified aliphatic hydrocarbon resin; the content of component (c) in the mixture being in the range of from 10 to 45 wt.-% relative to the total weight of the mixture;
wherein the mixture comprises a filler, the content of filler in the mixture being in the range of from 10 to 50 wt.-% relative to the total weight of the mixture.

2. The pressure-sensitive adhesive composition according to claim 1, wherein the filler is selected from any of chalk, alumina, alumina gel, boehmite, pseudoboehmite, calcium carbonate, magnesium carbonate, pyropylate, zeolite, talc, silica, silica gel, synthetic calcium silicates, anhydrous silicic acid powder, aluminum hydroxide, barite, barium sulfate, gypsum, or calcium sulfate.

3. The pressure-sensitive adhesive composition according to any of claims 1 or 2, wherein the content of component (c) in the mixture is in the range of from 25 wt.-% to 40 wt.-%, relative to the total weight of the mixture.

4. The pressure-sensitive adhesive composition according to any of claims 1 to 3, wherein the mixture further comprises a thixotropic agent, preferably a clay.

5. The pressure-sensitive adhesive composition according to claim 4, wherein the content of the thixotropic agent in the mixture is in the range of from 0.1 wt.-% to 25 wt.-%, preferably in the range of from 1 to 18 wt.-% relative to the total weight of the mixture.

6. The pressure-sensitive adhesive composition according to any of claims 1 to 5, wherein the total content of components (a) and (b) is at least 25 wt.-% relative to the total weight of the mixture.

7. The pressure-sensitive adhesive composition according to any of claims 1 to 6, wherein the total content of components (a) and (b) is in the range of from 25 wt.-% to 38 wt.-% relative to the total weight of the mixture.

8. The pressure-sensitive adhesive composition according to any of claims 1 to 7, wherein component (c) has a melt viscosity of less than 840 mPa·s at 160°C.

9. The pressure-sensitive adhesive composition according to any of claims 1 to 8, wherein the composition does not comprise liquid components.

10. The pressure-sensitive adhesive composition according to any of claims 1 to 9, wherein the composition does not comprise a plasticizer in a content of 8 wt.-% or more relative to the total weight of the mixture.

11. A pressure-sensitive adhesive tape comprising the composition according to any of claims 1 to 10.

12. A method of manufacturing a pressure-sensitive adhesive tape, comprising the steps of:
preparing a pressure-sensitive adhesive composition according to any of claims 1 to 10 by mixing components (a), (b) and (c); and
passing the pressure-sensitive adhesive composition through a flat die.

13. Method according to claim 12, wherein the pressure-sensitive adhesive composition according to any of claims 1 to 10 is prepared by an extrusion process.

## Patentansprüche

1. Haftklebstoffzusammensetzung umfassend eine Mischung von:
(a) einem Styrol-Butadien-Styrol-Triblockcopolymer,
(b) einem Styrol-Butadien-Diblockcopolymer, und
(c) einem aromatisch modifizierten aliphatischen Kohlenwasserstoffharz; wobei der Gehalt der Komponente (c) in der Mischung im Bereich von 10 bis 45 Gew.-%, bezogen auf das Gesamtgewicht der Mischung, liegt;
wobei die Mischung einen Füllstoff umfasst, wobei der Gehalt des Füllstoffs in der Mischung im Bereich von 10 bis 50 Gew.-%, bezogen auf das Gesamtgewicht der Mischung, liegt.

2. Haftklebstoffzusammensetzung gemäß Anspruch 1, wobei der Füllstoff ausgewählt ist aus einem von Kreide, Aluminiumoxid, Aluminiumoxidgel, Böhmit, Pseudoböhmit, Calciumcarbonat, Magnesiumcarbonat, Pyropylat, Zeolith, Talk, Siliciumdioxid, Silicagel, synthetischen Calciumsilicaten, wasserfreiem Kieselsäurepulver, Aluminiumhydroxid, Baryt, Bariumsulfat, Gips, oder Calciumsulfat.

3. Haftklebstoffzusammensetzung gemäß einem der Ansprüche 1 oder 2, wobei der Gehalt der Komponente (c) in der Mischung im Bereich von 25 Gew.-% bis 40 Gew.-%, bezogen auf das Gesamtgewicht der Mischung, liegt.

4. Haftklebstoffzusammensetzung gemäß einem der Ansprüche 1 bis 3, wobei die Mischung außerdem ein Thixotropiermittel, vorzugsweise einen Ton umfasst.

5. Haftklebstoffzusammensetzung gemäß Anspruch 4, wobei der Gehalt des Thixotropiermittels in der Mischung im Bereich von 0,1 Gew.-% bis 25 Gew.-%, vorzugsweise im Bereich von 1 bis 18 Gew.-%, bezogen auf das Gesamtgewicht der Mischung, liegt,

6. Haftklebstoffzusammensetzung gemäß einem der Ansprüche 1 bis 5, wobei der Gesamtgehalt der Komponenten (a) und (b) wenigstens 25 Gew.-%, bezogen auf das Gesamtgewicht der Mischung, beträgt.

7. Haftklebstoffzusammensetzung gemäß einem der Ansprüche 1 bis 6, wobei der Gesamtgehalt der Komponenten (a) und (b) im Bereich von 25 Gew.-% bis 38 Gew.-%, bezogen auf das Gesamtgewicht der Mischung, liegt.

8. Haftklebstoffzusammensetzung gemäß einem der Ansprüche 1 bis 7, wobei die Komponente (c) eine Schmelzviskosität von weniger als 840 mPa·s bei 160 °C aufweist.

9. Haftklebstoffzusammensetzung gemäß einem der Ansprüche 1 bis 8, wobei die Zusammensetzung keine flüssigen Komponenten umfasst.

10. Haftklebstoffzusammensetzung gemäß einem der Ansprüche 1 bis 9, wobei die Zusammensetzung keinen Weichmacher in einem Gehalt von 8 Gew.-% oder mehr, bezogen auf das Gesamtgewicht der Mischung, umfasst.

11. Haftklebeband umfassend die Zusammensetzung gemäß einem der Ansprüche 1 bis 10.

12. Verfahren zum Herstellen eines Haftklebebands, umfassend die Schritte:
Herstellen einer Haftklebstoffzusammensetzung gemäß einem der Ansprüche 1 bis 10 durch Vermischen der Komponenten (a), (b) und (c); und
Leiten der Haftklebstoffzusammensetzung durch eine Flachdüse.

13. Verfahren gemäß Anspruch 12, wobei die Haftklebstoffzusammensetzung gemäß einem der Ansprüche 1 bis 10 durch ein Extrusionsverfahren hergestellt wird.

## Revendications

1. Composition d'adhésif sensible à la pression comprenant un mélange :
(a) d'un copolymère à trois blocs styrène-butadiène-styrène,
(b) d'un copolymère à deux blocs styrène-butadiène, et
(c) d'une résine hydrocarbure aliphatique à modification aromatique ; la teneur en constituant (c) dans le mélange étant dans la plage de 10 à 45 % en poids par rapport au poids total du mélange ;
le mélange comprenant un agent de charge, la teneur en agent de charge dans le mélange étant dans la plage de 10 à 50 % en poids par rapport au poids total du mélange.

2. Composition d'adhésif sensible à la pression selon la revendication 1, dans laquelle l'agent de charge est choisi parmi l'une quelconque de craie, alumine, gel d'alumine, boehmite, pseudoboehmite, carbonate de calcium, carbonate de magnésium, pyropylate, zéolite, talc, silice, gel de silice, silicates de calcium synthétiques, poudre d'acide silicique anhydre, hydroxyde d'aluminium, baryte, sulfate de baryum, gypse ou sulfate de calcium.

3. Composition d'adhésif sensible à la pression selon l'une quelconque des revendications 1 ou 2, la teneur en constituant (c) dans le mélange étant dans la plage de 25 % en poids à 40 % en poids, par rapport au poids total du mélange.

4. Composition d'adhésif sensible à la pression selon l'une quelconque des revendications 1 à 3, le mélange comprenant en outre un agent thixotrope, de préférence une argile.

5. Composition d'adhésif sensible à la pression selon la revendication 4, la teneur de l'agent thixotrope dans le mélange étant dans la plage de 0,1 % en poids à 25 % en poids, de préférence dans la plage de 1 à 18 % en poids par rapport au poids total du mélange.

6. Composition d'adhésif sensible à la pression selon l'une quelconque des revendications 1 à 5, la teneur totale des constituants (a) et (b) étant d'au moins 25 % en poids par rapport au poids total du mélange.

7. Composition d'adhésif sensible à la pression selon l'une quelconque des revendications 1 à 6, la teneur totale des constituants (a) et (b) étant dans la plage de 25 % en poids à 38 % en poids par rapport au poids total du mélange.

8. Composition d'adhésif sensible à la pression selon l'une quelconque des revendications 1 à 7, le constituant (c) ayant une viscosité à l'état fondu inférieure à 840 mPa·s à 160 °C.

9. Composition d'adhésif sensible à la pression selon l'une quelconque des revendications 1 à 8, la composition ne comprenant pas de constituants liquides.

10. Composition d'adhésif sensible à la pression selon l'une quelconque des revendications 1 à 9, la composition ne comprenant pas de plastifiant en une teneur de 8 % en poids ou plus par rapport au poids total du mélange.

11. Ruban adhésif sensible à la pression comprenant la composition selon l'une quelconque des revendications 1 à 10.

12. Procédé de fabrication d'un ruban adhésif sensible à la pression, comprenant les étapes consistant à :
préparer une composition d'adhésif sensible à la pression selon l'une quelconque des revendications 1 à 10 par mélange des constituants (a), (b) et (c) ; et
passage de la composition d'adhésif sensible à la pression à travers une filière plate.

13. Procédé selon la revendication 12, dans lequel la composition d'adhésif sensible à la pression selon l'une quelconque des revendications 1 à 10 est préparée par un procédé d'extrusion.
